# EUROPÄISCHE PATENTSCHRIFT

(11) **EP 1 562 054 B1**
(45) Veröffentlichungstag und Bekanntmachung des Hinweises auf die Patenterteilung: **01.09.2010**
(21) Anmeldenummer: 05100609.6
(22) Anmeldetag: 31.01.2005
(51) Int. Cl.: G01S 15/93

(54) **Fahrerassistenzvorrichtung**
Device for assisting a driver of a vehicle
Dispositif d'assistance au conducteur d'un véhicule

(30) Priorität: 03.02.2004 DE 102004005225
(43) Veröffentlichungstag der Anmeldung: 10.08.2005
(73) Patentinhaber: ROBERT BOSCH GMBH, 70442 Stuttgart (DE)
(72) Erfinder: Fehse, Meike, 71229 Leonberg (DE)

(56) Entgegenhaltungen:
- EP-A- 0 305 907
- EP-A- 1 002 920
- WO-A-03/087874
- DE-A1- 3 813 083
- DE-A1- 4 119 579
- DE-A1- 10 117 516
- DE-A1- 19 836 310
- DE-A1- 19 915 753
- FR-A- 2 749 670
- US-A- 4 458 446

## Beschreibung

### Stand der Technik

Die Erfindung geht aus von einer Fahrerassistenzvorrichtung nach der Gattung des Hauptanspruchs, die zur Vermeidung einer Kollision einer Fahrzeugtüre mit einem Hindernis bei einem Öffnen der Fahrzeugtüre dient. Aus der DE 195 33 804 A1 ist bereits eine Fahrzeugtüre mit einer hilfskraftbetätigten Feststellvorrichtung bekannt. Diese dient dazu zu verhindern, dass auch bei einem unachtsamen Öffnen der Türe diese gegen einen benachbarten Gegenstand stößt, insbesondere gegen ein weiteres Fahrzeug. Hierzu ist am Türrand ein Sensor befestigt, der bei einem vorbestimmten Abstand zu dem Gegenstand eine Feststellvorrichtung im Sinne einer Blockierung einer weiteren Türöffnungsbewegung verzögerungsfrei auslöst.

Aus der EP 1002 920 A2 ist ein automatisches Türöffnungssystem für ein Kraftfahrzeug bekannt, das eine Sensoreinrichtung zur Erfassung von Objekten in einem vorgegebenen Bereich um das Fahrzeug und eine zumindest einer Tür zugeordnete Vorrichtung aufweist, die das Eindringen des Objektes in den vorgegebenen Bereich anzeigt. Die Höhe des sich in dem vorgegebenen Bereich befindlichen Objekt wird relativ zu einem vorgegebenen Bezugskoordinatensystem gemessen, um ein automatisches Türöffnungssystem zu schaffen, das eine Gefährdung von Personen oder eine Beschädigung von Hindernissen bei einem Öffnen der Tür verhindert. Hierzu wird die Türöffnungseinrichtung derart ausgeführt, dass die Türe bei einem erfassten Hindernis nur bis zu einem vorgegebenen Abstand geöffnet werden kann. Ferner kann auch ein Signalton ausgegeben werden, der das Stoppen der Funktion Türöffnung und gegebenenfalls eine automatische Türschließung veranlasst. In einer weiteren Ausführungsform kann die Türe auch starr in der geöffneten Position gehalten werden.

Aus der DE 38 130 83 A1 ist eine Einparkeinrichtung für Kraftfahrzeuge bekannt, bei der einem Fahrer Instruktionen ausgegeben werden, um den Wagen entlang einem speziellen Weg in eine Parklücke einzuparken. Hierbei werden Bewegungssensoren und von Abstandsmesseinrichtungen des Fahrzeugs erfasst Abstandswerte sowie die Fahrzeuglänge berücksichtigt, um eine Parklücke zu bestimmen, die für das Einparken groß genug ist. In einer Anzeige wird dem Fahrer ein Hinweis ausgegeben, bis zu welchem Abstand zu einem Hindernis der Wagen fahren kann. Dies betrifft einerseits einen Ausgangspunkt für das Rücksetzen in die Parklücke, andererseits den noch möglichen Bewegungsweg des Fahrzeugs bis zum Zusammentreffen mit einem Hindernis.

### Vorteile der Erfindung

Die erfmdungsgemäße Fahrerassistenzvorrichtung mit den Merkmalen der unabhängigen Ansprüche hat demgegenüber den Vorteil, dass Informationen zur Türöffnung derart ausgegeben werden, ob ein Öffnen gefahrlos möglich ist oder ob ein Hindernis beachtet werden muss. Diese Informationen werden bei einer Vorbeifahrt des Fahrzeugs an dem Hindernis aufgenommen. Durch eine ortsabhängige Erfassung der Hindernisse ist es möglich, den Sensor zur Erfassung des Abstands räumlich von der Fahrzeugtüre zu trennen. Dieser kann sich nunmehr auch an einer anderen Stelle am Fahrzeug befmden, da die Messungen und damit die Position der erfassten Hindernisse so umgerechnet wird, dass die Orte der Hindernisse mit einer Position der Fahrzeugtüre entsprechend verglichen werden können. Ferner ist es möglich, sich somit rechnerisch eine Übersicht über den Verlauf eines Hindemisabstands zu verschaffen. Damit wird es z.B. ermöglicht, einen Anhaltepunkt auszugeben, an dem ein Öffnen der Türe möglich ist, während dies an Positionen vor und/oder nach dem Anhaltepunkt nicht mehr möglich sein kann. Damit können einem Fahrer gegenüber einer rein statischen Messung Empfehlungen gegeben werden, wie er das Fahrzeug zu führen hat und an welcher Stelle er anhalten muss, um ein gefahrloses Türöffnen zu ermöglichen.

Durch die in den Unteransprüchen aufgeführten Maßnahmen sind vorteilhafte Weiterbildungen und Verbesserungen der erfindungsgemäßen Fahrerassistenzvorrichtung möglich. Besonders vorteilhaft ist, eine Auswerteeinheit zur Berücksichtigung einer Eigenbewegung des Hindernisses vorzusehen. Damit kann z.B. die Geschwindigkeit eines vorbeifahrenden Radfahrers berücksichtigt werden und zumindest zur zeitweisen Ausgabe von Warnsignalen führen, während sich das Hindernis am Fahrzeug vorbei bewegt.

Ferner ist es vorteilhaft, Fahrzeugdaten zur Berechnung einer Türöffnung in Abhängigkeit von einem Türöffnungswinkel in der Fahrerassistenzvorrichtung zu speichern. Dadurch kann die Fahrerassistenzvorrichtung durch ein entsprechendes Anpassen der gespeicherten Größen an eine Verwendung in verschiedenen Fahrzeugtypen angepasst werden. Zudem ist es vorteilhaft, Daten für mehrere Türen am Fahrzeug zu speichern. Vorteilhaft wird hierbei ein Abstand zu Hindernissen für alle Türen berechnet bzw. es wird für jede Tür ein von der Positionierung des Fahrzeugs gegenüber den Hindernissen abhängiger maximaler Türöffnungswinkel bestimmt. Ein maximaler Türöffnungswinkel wird vorteilhaft in einer Anzeige ausgegeben.

Besonders vorteilhaft ist eine Anzeige, aus der ein Hinweis auf ein maximales Öffnen der Türe entnehmbar ist, an der Türe selbst anzuordnen. Diese Anzeige kann von einem Benutzer bei einem Türöffnen unmittelbar wahrgenommen werden.

Es ist ferner vorteilhaft, Sensoren einer Einparkvorrichtung für die erfmdungsgemäße Fahrerassistenzvorrichtung zu verwenden. Hierdurch kann auf den Einbau eigener oder zusätzlicher Sensoren zur Bestimmung eines Kollisionsrisikos für die Fahrzeugtüren verzichtet werden.

In einer weiteren Ausführungsform ist es auch möglich, einen Stellmotor zur Begrenzung des Türöffnungswinkels über eine Schnittstelle mit der erfindungsgemäßen Fahrerassistenzvorrichtung zu verbinden.

### Zeichnung

Ausführungsbeispiele der Erfindung sind in der Zeichnung dargestellt und in der nachfolgenden Beschreibung näher erläutert. Es zeigen
Figur 1 eine schematische Darstellung einer erfindungsgemäßen Fahrerassistenzvorrichtung,

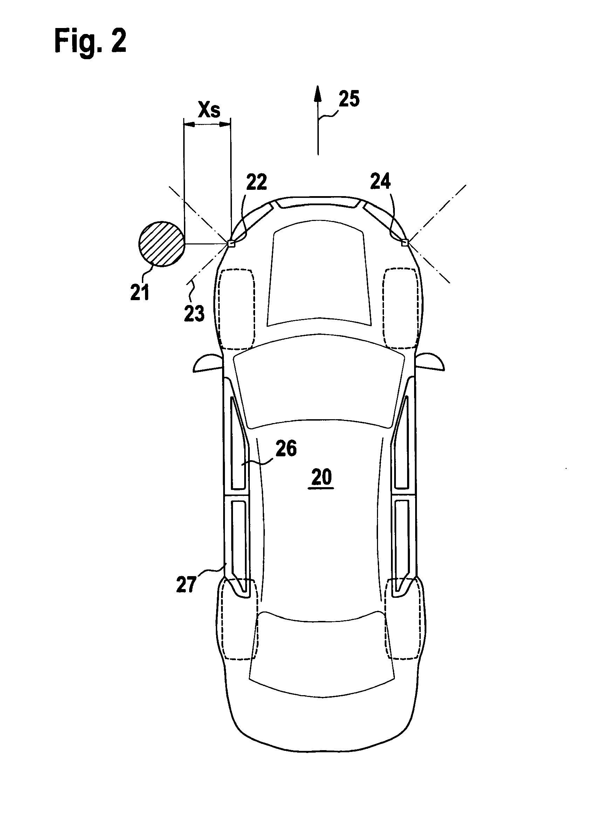

Figur 2 bis 4 ein Vorbeifahren eines Fahrzeugs mit einer erfindungsgemäßen Fahrerassistenzvorrichtung an einem Hindernis.

### Beschreibung des Ausführungsbeispiels

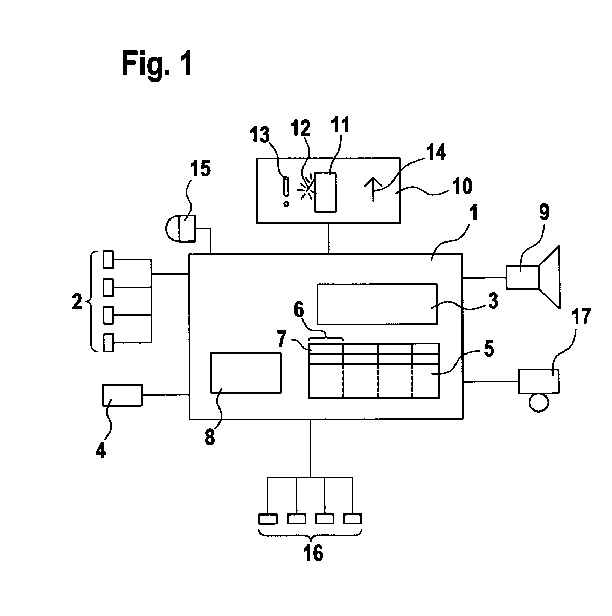

Im Folgenden wird eine erfmdungsgemäße Fahrerassistenzvorrichtung 1 am Beispiel einer Verwendung in einem Kraftfahrzeug erläutert. In der Figur 1 ist eine Fahrerassistenzvorrichtung 1 dargestellt, die mit Abstandssensoren 2 verbunden ist, die insbesondere an den Fahrzeugseiten angeordnet sind. Bevorzugt handelt es sich bei den Abstandssensoren 2 um Sensoren einer Einparkvorrichtung, die Abstände des Fahrzeugs zu Hindernissen in der Fahrzeugumgebung bestimmt. Die Abstandssensoren 2 sind hierzu bevorzugt als Ultraschallsensoren ausgeführt. Die Abstandssensoren 2 sind rund um das Fahrzeug in vorgegebenen Abständen angeordnet. Ein von den Abstandssensoren 2 ausgesendetes Signal wird durch Hindernisse reflektiert und der Abstand wird bevorzugt aus der Laufzeit des reflektierten Signals bestimmt. Anstelle von Ultraschallsensoren können auch optischen Sensoren oder Radarsensoren eingesetzt werden.

Die Abstandssensoren 2 werden von einer Recheneinheit 3 der Fahrerassistenzvorrichtung 1 gesteuert und ausgewertet. Die Recheneinheit 3 greift ferner auf einen Wegstreckensensor 4 zurück, über den eine zurückgelegte Wegstrecke des Fahrzeugs erfassbar ist. Bevorzugt wird eine zurückgelegte Wegstrecke und damit eine Ortsinformation über die Position des Fahrzeugs über eine Auswertung der Raddrehung mittels geeigneter Raddrehungssensoren ermittelt. Hiermit wird es ermöglicht, dass den Abstandswerten, die über die Abstandssensoren 2 gemessen wird, ein Ort an einer von dem Fahrzeug zurückgelegten Wegstrecke zugewiesen werden kann, indem Wegeinformationen von dem Wegstreckensensor 4 den jeweiligen Informationen der Abstandssensoren 2 zugeordnet werden. Hierzu weist die Fahrerassistenzvorrichtung einen Speicher 5 auf, in dem gemessene Abstandswerte ortsbezogen abgelegt werden. Jede Spalte 6 ist dabei einem Abstandssensor zugeordnet. Jede Zeile 7 ist dabei einem Abstandswert zu der aktuellen Fahrzeugposition zugeordnet, so dass aus einem Tabelleneintrag der Abstand zur aktuellen Fahrzeugposition ermittelbar ist. Anhand der ortsabhängig gespeicherten Abstandswerte kann die Recheneinheit 3 ermitteln, bei welchen Positionen der Abstand im Bereich einer Fahrzeugtüre so gering ist, dass bei einem normalen Öffnen der Fahrzeugtüre die Türe gegen das Hindernis stößt und wann ein gefahrloses Öffnen möglich ist. Anstelle der gemessenen Abstandswerte und der zurückgelegten Wegstrecken kann in dem Speicher 5 in einer anderen Ausführungsform auch ein maximaler Türöffnungswinkel positionsabhängig gespeichert werden. In einer weiteren Ausführungsform hierzu werden dabei keine absoluten Winkelwerte, sondern eine Zuordnung zu einem Winkelbereich abgelegt. Ist z.B. eine Öffnung nur bis zu 15° möglich, soll die Tür nicht geöffnet werden. Ist eine Öffnung zwischen 15° und 35° möglich, soll die Tür nur vorsichtig geöffnet werden. Ist dagegen eine Öffnung über 35° hinaus möglich, so bestehen keinerlei Einschränkungen.

In einer bevorzugten Ausführungsform werden je nach Fahrtrichtung des Fahrzeugs entweder in einem vorderen Bereich des Fahrzeugs angeordnete Sensoren oder, bei einer Rückwärtsfahrt, die in einem hinderten Bereich des Fahrzeugs angeordneten Sensoren angesteuert. Es ist jedoch auch möglich, alle Sensoren auszuwerten.

Zur Berechnung, bei welchen Abstandswerten eine Kollision zwischen der Türe und einem Hindernis erfolgt, greift die Recheneinheit 3 auf einen Speicher 8 zu, in dem Fahrzeugdaten insbesondere bezüglich der Fahrzeugtüren abgelegt sind. Aus den Daten wird ein minimaler Abstand bestimmt, der für ein Öffnen einer Fahrzeugtüre jeweils vorhanden sein muss.

Stellt die Recheneinheit 3 fest, dass es bei einem Öffnen einer Fahrzeugtüre zu einer Kollision kommt, so wird eine Warnung ausgegeben. In einer ersten Ausführungsform erfolgt eine Warnung akustisch über einen Lautsprecher 9. Diese Warnung kann einerseits durch einen Signalton, andererseits jedoch auch durch einen gesprochenen Sprachbefehl erfolgen, wie z.B. "Fahrertüre nicht öffnen". In einer weiteren Ausführungsform kann eine Warnung auch über eine Anzeige 10 ausgegeben werden. In der Anzeige 10 ist in einer bevorzugten Ausführungsform ein Fahrzeugpiktogramm 11 dargestellt, bei dem ein Symbol 12 für eine Fahrzeugtüre hervorgehoben ist, z.B. durch ein Aufblinken und/oder durch ein Einfärben in einer Warnfarbe. Zudem wird bevorzugt ein Warnsymbol 13 mit ausgegeben. Ein optischer Hinweis an dem Fahrzeugpiktogramm 11 erfolgt dabei jeweils unabhängig für jede Fahrzeugtüre. Das Warnsymbol 13 wird bereits dann angezeigt, wenn sich lediglich eine der Fahrzeugtüren nicht öffnen lässt. Die Anzeige 10 ist dabei bevorzugt in einem Kombiinstrument zu einer Anzeige einer Vielzahl von Fahrzeugdaten vor dem Fahrer des Kraftfahrzeugs angeordnet.

In einer weiteren Ausführungsform können auch Fahrempfehlungen 14 an den Fahrer ausgegeben werden. Gemäß der Figur 1 ist in diesem Beispiel ein Pfeil nach vorne dargestellt, der signalisiert, dass der Fahrer noch ein Stück nach vorne fahren muss, um ein Kollisionsrisiko beim Öffnen einer Türe auszuschließen. Aus den ermittelten, gespeicherten Abstandswerten bestimmt dabei die Fahrerassistenzvorrichtung einen idealen Punkt, an dem eine Türe geöffnet werden soll. Mittels der Anzeige 10 werden einem Fahrer dann entsprechende Hinweise gegeben, ob er vorfahren oder zurückfahren soll, um diesen Punkt zu erreichen. An diesem Punkt, der gegebenenfalls auch als ein Wegebereich ausgeführt sein kann, wird der Fahrer entsprechend aufgefordert, das Fahrzeug anzuhalten.

In einer weiteren Ausführungsform greift die Fahrerassistenzvorrichtung 1 auf einen Stellmotor 17 zu, der bei einem auftretenden Kollisionsrisiko ein Öffnen der jeweiligen Fahrzeugtüre blockiert oder ein Öffnen nur bis zu einem bestimmten Türöffnungswinkel zulässt, bis zu dem ein gefahrloses Öffnen möglich ist.

Zur Erfassung beweglicher Hindernisse ist die Fahrerassistenzvorrichtung in einer weiteren Ausführungsform mit einer Radareinheit 15 verbunden, die bevorzugt ansonsten für ein abstandsgeregeltes Folgefahren eingesetzt wird. Die Radareinheit 15 erfasst bewegliche Hindernisse in der Fahrzeugumgebung, so dass deren Eigengeschwindigkeit bei der Bestimmung einer möglichen Kollision berücksichtigt werden können. Nähert sich z.B. ein Fahrrad dem Fahrzeug, so wird infolge einer Abstandsmessung der Radareinheit gegebenenfalls ein Öffnen der Türe von der Recheneinheit 3 nicht zugelassen, wenn sich das bewegliche Hindernis in der näheren Fahrzeugumgebung befindet und insbesondere seitlich neben dem Fahrzeug fährt. Damit kann ein Verletzungsrisiko für Fußgänger und/oder Fahrradfahrer minimiert werden, die sich bei einem Öffnen einer Fahrzeugtüre in der Nähe der Fahrzeugtüre aufhalten.

In einer weiteren Ausführungsform sind Anzeigen 16 unmittelbar an den Fahrzeugtüren angeordnet. In einer ersten Ausführungsform können diese Anzeigen als eine Balkenanzeige ausgeführt sein, wobei aus der Anzahl beleuchteter Skalenfelder der Balkenanzeige erkennbar ist, wie nah sich ein Hindernis an dem Fahrzeug befmdet. In einer weiteren Ausführungsform können auch Lichtquellen, z.B. Leuchtdioden, an den Türen angeordnet sein, die in ihrer Beleuchtungsfarbe veränderlich sind. Bei grünem Licht kann die Tür gefahrlos geöffnet werden, bei orangem Licht muss ein Hindernis beachtet werden und bei rotem Licht sollte die Türe nicht geöffnet werden. Neben einer Anordnung an der Fahrzeugtüre selbst kann eine solche Anzeige auch in einen bei nicht verriegelter Türe aus der Türe herausragenden Türschlossverriegelungsknopf eingebracht sein. Neben einer Anordnung an der Türe selbst kann auch eine Anordnung solcher Anzeigen in unmittelbarer Nähe zu den Türen erfolgen. Insbesondere für Beifahrer oder Passagiere im Fond des Fahrzeugs kann damit eine eigenständige Warnung bezüglich einer Türöffnung in Abhängigkeit von dem jeweiligen Abstand zu den Hindernissen erfolgen. Alternativ oder ergänzend ist auch eine akustische Warnung möglich.

Eine Funktionsweise der erfindungsgemäßen Fahrerassistenzvorrichtung ist anhand eines Vorbeifahrens eines Kraftfahrzeugs 20 an einem sich an der linken Fahrzeugseite befindenden Hindernisses 21 beschrieben. Hierbei kann das Fahrzeug vorwärts aber auch rückwärts fahren. In das Fahrzeug 20 ist eine erfindungsgemäße Fahrerassistenzvorrichtung 1 zur Vermeidung einer Kollision einer Fahrzeugtüre mit einem Hindernis bei einem Öffnen der Fahrzeugtüre eingebaut. An einer linken Vorderecke des Fahrzeugs 20 ist ein erster Abstandssensor 22 angeordnet, der einen Signalkegel 23 aufweist, innerhalb dem Hindernisse detektiert werden können. Ein entsprechender Abstandssensor 24 ist an der rechten Fahrzeugseite angeordnet. Das Fahrzeug 20 bewegt sich in eine durch einen Pfeil gekennzeichnete Fahrtrichtung 25 fort. Der erste Abstandssensor 22 hat das Hindernis 21 in seinem Signalkegel 23 erfasst und einen Abstand zwischen dem ersten Abstandssensor 22 und dem Hindernis 21 mit der Größe Xs erfasst. Zu diesem Zeitpunkt können sowohl eine Fahrertüre 26 auf der linken Seite des Fahrzeugs ebenso wie eine hintere linke Fahrzeugtüre 27 noch gefahrlos geöffnet werden.

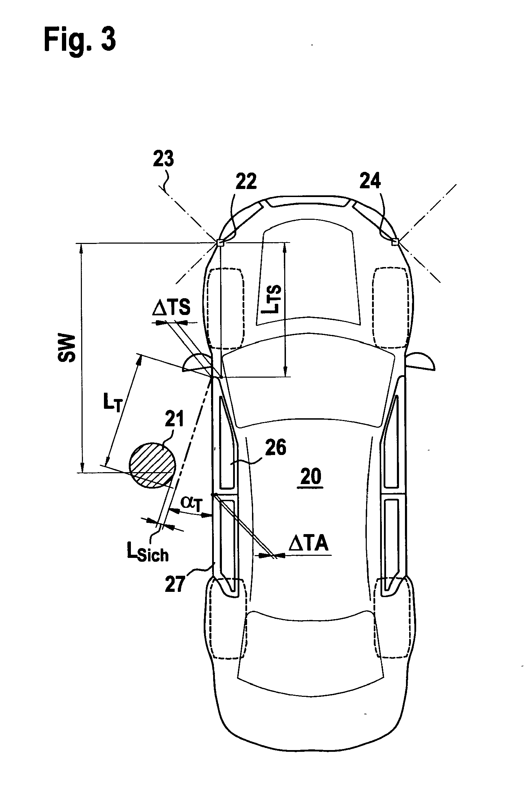

Bei einem weiteren Fahren des Fahrzeugs 20 in Fahrtrichtung 25 bewegt sich das Fahrzeug 20 an dem Hindernis 21 vorbei. Bei der Erfassung mittels des ersten Abstandssensors 22 wird die Position des Hindernisses 21 bestimmt und in dem Speicher 5 abgelegt. Der Speicher 5 ist dabei bevorzugt so ausgelegt, dass bestimmten Bereichen des Wegstücks ein jeweiliger Abstand zu dem Hindernis 21 jeweils zugewiesen wird. In der Figur 3 ist das Fahrzeug bereits so an dem Hindernis 21 vorbeigefahren, z.B. an einer Parkflächenbegrenzung, so dass sich das Hindernis nunmehr auf Höhe der Fahrertüre 26 befindet. Der Recheneinheit 3 der Fahrerassistenzvorrichtung ist es nunmehr bekannt, dass sich auf der Höhe der Fahrertüre 26 das Hindernis 21 befindet, das gegenüber dem Abstandssensor 22 einen Abstand Xs aufweist. Hierbei wird von einem Geradeauslauf des Fahrzeugs ausgegangen. In einer weiteren Ausführungsform kann neben dem Wegstreckensensor 4 auch eine in der Figur 1 nicht dargestellter Drehratensensor oder Lenkwinkelsensor abgefragt werden, auf dem neben dem zurückgelegten Abstand auch ein eingeschlagener Winkel des Fahrzeugs und damit die vollständige Bahninformation für das Fahrzeug entnehmbar ist. Damit kann eine zweidimensionale Umgebungskarte für Hindernisse in der Fahrzeugumgebung erstellt werden.

Um einen maximalen Öffnungswinkel der Fahrertüre 26 bestimmen zu können, ist es erforderlich, zahlreiche Fahrzeuggrößen mit in die Berechnung einzubeziehen. Solche Fahrzeuggrößen sind einerseits der Versatz zwischen der weitesten Türvorwölbung und der Position der Türangel ΔTA, ein Versatz der Türangel gegenüber dem Abstandssensor ΔTS, der Abstand zwischen der Türangel und dem Sensor LTS und die Länge der Türe LT. Zudem ist die von der Messung gegenüber dem Hindernis zurückgelegte Wegstrecke SW mit zu berücksichtigen. Ferner ist insbesondere unter Berücksichtigung von Messunsicherheiten ein Sicherheitsabstand Ssich mit in die Rechnung einzubeziehen.

Der kürzeste Abstand zu Hindernis Xs wird mittels des Abstandsmesssystems bestimmt. Die zurückgelegte Wegstrecke SW wird von dem Wegstreckensensor 4 bereitgestellt. Sowohl die zurückgelegte Wegstrecke SW, als auch der gemessene Abstand Xs werden bevorzugt dem Fahrerassistenzsystem über ein Datenbussystem übertragen. Die Werte LT, LTS, ΔTS und ΔTA sind in dem Speicher 8 der Fahrerassistenzvorrichtung gespeichert. Ein Grenzöffnungswinkel ergibt sich dann für die Vorwärtsfahrt wie folgt ΔGrenz = arctan ((Xs-ΔTS-ΔTA-Ssich)/SW-LTS). Für die Rückwärtsfahrt ergibt sich der Grenzöffnungswinkel wie folgt ΔGrenz = arctan ((Xs-ΔTS-ΔTA-Ssich)/-1 *(SW-LTS)). Bei einer Position, die der zurückgelegten Wegstrecke entspricht, und die der Position des Hindernisses 21 gemäß der Figur 3 entspricht, ist der Öffnungswinkel ΔGrenz dabei so gering, dass eine sinnvolle Öffnung der Fahrzeugtüre nicht möglich ist. Es wird daher eine Warnanzeige vorgenommen, wie sie in der Anzeige 10 gemäß der Figur 1 dargestellt ist. Es wird eine Warnung vor einem Öffnen der Fahrertüre ausgegeben. Eine Anzeige kann gegebenenfalls durch eine akustische Warnung mit dem Lautsprecher 9 unterstützt werden. An der Fahrzeugtüre selbst wird in einer weiteren Ausführungsform eine in der Figur nicht gezeigte rote Warnleuchte aktiviert. Soll eine Türöffnung nicht erfolgen, kann die Türe über den Stellmotor 17 gegebenenfalls automatisch blockiert werden.

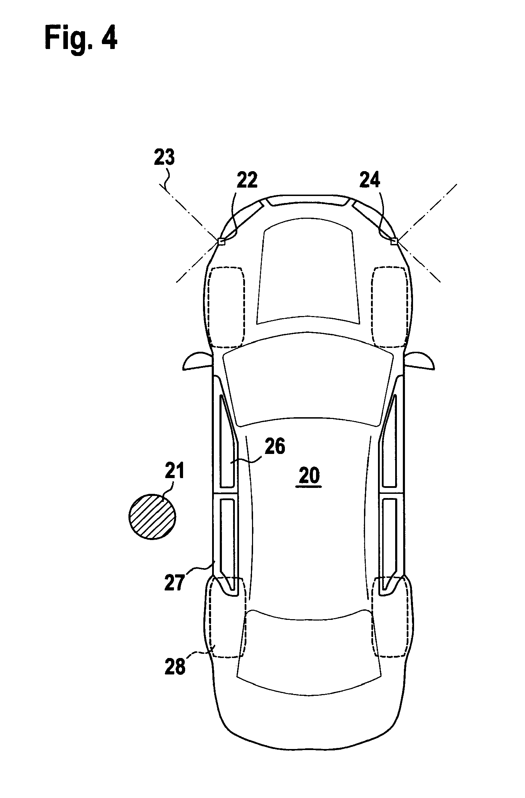

Bei der Vermessung des Hindernisses 21 wurde ferner von der Fahrerassistenzvorrichtung festgestellt, dass das Hindernis 21 eine endliche Ausdehnung hat und dass es nach einer kurzen Fahrstrecke für ein Öffnen der Fahrertüre 26 nicht mehr hinderlich ist. Dieser Punkt ist erreicht, wenn die Wurzel aus ((SW-LTS)²+(XS-ΔTS-ΔTA-Ssich)² größer ist als die Länge der Türe LT. Daher wird gemäß der Ausführung in der Figur 1 ein Fahrhinweis 14 in der Anzeige 10 dargestellt, der dem Fahrer anzeigt, weiter nach vorne zu fahren. Setzt der Fahrer nun noch ein Stück weiter nach vorne vor, so erreicht er die Position, wie sie in der Figur 4 gezeigt ist. Das Hindernis befindet sich nun nicht mehr vor der Fahrertüre 26, sondern vor der hinteren, linken Fahrzeugtüre 27. Die Fahrertüre 26 kann nun gefahrlos geöffnet werden. Entsprechend kann die Anzeige modifiziert werden. Eine ausgegebene Warnung wird nun auf die hintere, linke Fahrzeugtüre bezogen. Das Warnsymbol 12 für die Fahrertüre erlischt.

Anstelle des Hinweises, dass ein Fahrer weiter nach vorne fahren soll, kann in der Anzeige 10 auch ein Hinweis dafür ausgegeben werden, dass ein Fahrer das Fahrzeug zurücksetzen soll, wenn sich z.B. auch vor dem Fahrzeug ein Hindernis befindet. Hat das Fahrzeug eine ideale Position erreicht, in der die Fahrertüre 26 geöffnet werden kann, wird entsprechend ein Stoppsignal ausgegeben. Dieses Stoppsignal kann davon abhängen, ob alle Türen gefahrlos geöffnet werden können oder ob nur die Fahrertüre 26 bzw. nur die Fahrer- und die Beifahrertüre geöffnet werden können. Befinden sich im hinteren Teil des Fahrzeugs keine Passagiere, kann eine der letzteren Optionen gewählt werden. Soll nun auch aus dem hinteren Fahrzeugteil aus der Positionierung des Fahrzeugs 20 gemäß der Figur 4 ein Passagier aussteigen, so wird dem Fahrer weiterhin geraten, das Fahrzeug vorzuziehen. Erst wenn sich das Hindernis 21 auf Höhe des hinteren linken Reifens 28 befindet, wird ein entsprechendes Stoppsignal in der Anzeige 10 ausgegeben. Ein solches Stoppsignal kann z.B. durch einen entsprechend angezeigten Text "Stop" oder durch eine Grünfärbung des Fahrzeugpiktogramms 11 ausgegeben werden. Ein Stoppsignal kann ergänzend oder alternativ auch akustisch durch einen Signalton oder durch eine Sprachausgabe "_{"}Stop" ausgegeben werden.

## Patentansprüche

1. Fahrerassistenzvorrichtung zur Vermeidung einer Kollision einer Fahrzeugtüre (26, 27) mit einem Hindernis (21) bei einem Öffnen der Fahrzeugtüre (26, 27), mit einer Ausgabeeinheit (9, 10) zur Ausgabe von Informationen zur Türöffnung, mit wenigstens einer an dem Fahrzeug (20) angeordneten Messeinheit (2) zur Messung eines Abstands (Xs) zu dem Hindernis (21), wobei der Abstand (Xs) zur Ermittlung der Informationen während einer Vorbeifahrt an dem Hindernis (21) gemessen wird, **gekennzeichnet durch** eine Ausgabeeinheit (9,10) zur Ausgabe eines Anhaltepunkts des Fahrzeugs (20) zum Öffnen der Fahrzeugtüre ohne Kollision mit dem Hindernis (21).

2. Fahrerassistenzvorrichtung nach Anspruch 1, **dadurch gekennzeichnet, dass** der gemessene Abstand (Xs) zu dem Hindernis einer Position des Fahrzeugs (20) an einer Wegstrecke des Fahrzeugs (20) zugeordnet wird.

3. Fahrerassistenzvorrichtung nach einem der vorherigen Ansprüche, **gekennzeichnet durch** eine Auswerteeinheit (3) zur Berücksichtigung einer Eigenbewegung des Hindernisses (21).

4. Fahrerassistenzvorrichtung nach einem der vorherigen Ansprüche, **dadurch gekennzeichnet, dass** Fahrzeugdaten zur Berechnung einer Türöffnung in Abhängigkeit von einem Türöffnungswinkel in der Fahrerassistenzvorrichtung (1) gespeichert sind.

5. Fahrerassistenzvorrichtung nach einem der vorherigen Ansprüche, **gekennzeichnet durch** einen Speicher (8) zur Speicherung von Daten für mehrere Fahrzeugtüren des Fahrzeugs.

6. Fahrerassistenzvorrichtung nach einem der vorherigen Ansprüche, **gekennzeichnet durch** eine Ausgabeeinheit (9, 10) zur Ausgabe eines maximalen Öffnungswinkels.

7. Fahrerassistenzvorrichtung nach einem der vorherigen Ansprüche, **gekennzeichnet durch** eine an der Fahrzeugtüre (26, 27) angeordnete Anzeige (16) zur Ausgabe von Warnungen.

8. Fahrerassistenzvorrichtung nach einem der vorherigen Ansprüche, **dadurch gekennzeichnet, dass** die wenigstens eine Messeinheit (2) ein Abstandssensor einer Einparkvorrichtung ist.

9. Fahrerassistenzvorrichtung nach einem der vorherigen Ansprüche, **gekennzeichnet durch** eine Schnittstelle zu einer Stelleinheit (17) zur Begrenzung des Türöffnungswinkels in Abhängigkeit von der Fahrzeugposition.

## Claims

1. Device for assisting a driver to avoid a collision of a vehicle door (26, 27) with an obstacle (21) when the vehicle door (26, 27) opens, having an output unit (9, 10) for outputting information about the opening of the door, having at least one measuring unit (2) which is arranged on the vehicle (20) and has the purpose of measuring a distance (Xs) from the obstacle (21), wherein the distance (Xs) is measured in order to determine the information during travel past the obstacle (21), **characterized by** an output unit (9, 10) for outputting a stopping point of the vehicle (20) for the opening of the vehicle door without a collision with the obstacle (21).

2. Device for assisting a driver according to Claim 1, **characterized in that** the measured distance (Xs) from the obstacle is assigned to a position of the vehicle (20) on a path of the vehicle (20).

3. Device for assisting a driver according to one of the preceding claims, **characterized by** an evaluation unit (3) for taking into account a movement of the obstacle (21) itself.

4. Device for assisting a driver according to one of the preceding claims, **characterized in that** vehicle data for calculating opening of a door as a function of a door opening angle are stored in the device (1) for assisting a driver.

5. Device for assisting a driver according to one of the preceding claims, **characterized by** a memory (8) for storing data for a plurality of vehicle doors of the vehicle.

6. Device for assisting a driver according to one of the preceding claims, **characterized by** an output unit (9, 10) for outputting a maximum angle of aperture.

7. Device for assisting a driver as claimed in one of the preceding claims, **characterized by** a display (16) which is arranged on the vehicle door (26, 27) and has the purpose of outputting warnings.

8. Device for assisting a driver according to one of the preceding claims, **characterized in that** the at least one measuring unit (2) is a distance sensor of a parking device.

9. Device for assisting a driver according to one of the preceding claims, **characterized by** an interface with an actuating unit (17) for limiting the angle of aperture of the door as a function of the position of the vehicle.

## Revendications

1. Dispositif d'assistance au conducteur pour éviter une collision d'une portière de véhicule (26, 27) avec un obstacle (21) lors d'une ouverture de la portière de véhicule (26, 27), comprenant une unité de diffusion (9, 10) pour diffuser des informations à propos de l'ouverture de la portière, comprenant au moins une unité de mesure (2) disposée sur le véhicule (20) pour mesurer un écart (Xs) par rapport à l'obstacle (21), l'écart (Xs) étant mesuré pour déterminer les informations pendant un passage à côté de l'obstacle (21), **caractérisé par** une unité de diffusion (9, 10) pour diffuser un point d'arrêt du véhicule (20) pour ouvrir la portière de véhicule sans collision avec l'obstacle (21).

2. Dispositif d'assistance au conducteur selon la revendication 1, **caractérisé en ce que** l'écart (Xs) mesuré par rapport à l'obstacle est associé à une position du véhicule (20) sur un trajet parcouru par le véhicule (20).

3. Dispositif d'assistance au conducteur selon l'une des revendications précédentes, **caractérisé par** une unité d'interprétation (3) pour tenir compte d'un mouvement propre de l'obstacle (21).

4. Dispositif d'assistance au conducteur selon l'une des revendications précédentes, **caractérisé en ce que** les données du véhicule sont enregistrées dans le dispositif d'assistance au conducteur (1) pour calculer une ouverture de la portière en fonction d'un angle d'ouverture de la portière.

5. Dispositif d'assistance au conducteur selon l'une des revendications précédentes, **caractérisé par** une mémoire (8) pour enregistrer les données pour plusieurs portières du véhicule.

6. Dispositif d'assistance au conducteur selon l'une des revendications précédentes, **caractérisé par** une unité de diffusion (9, 10) pour diffuser un angle d'ouverture maximum.

7. Dispositif d'assistance au conducteur selon l'une des revendications précédentes, **caractérisé par** un indicateur (16) disposé sur la portière de véhicule (26, 27) pour diffuser des alertes.

8. Dispositif d'assistance au conducteur selon l'une des revendications précédentes, **caractérisé en ce que** l'au moins une unité de mesure (2) est un détecteur d'écart d'un dispositif de stationnement.

9. Dispositif d'assistance au conducteur selon l'une des revendications précédentes, **caractérisé par** une interface avec une unité de réglage (17) pour limiter l'angle d'ouverture de la portière en fonction de la position du véhicule.
